(19) **Europäisches Patentamt / European Patent Office / Office européen des brevets**

(11) **EP 4 575 435 A1**

(12) **EUROPEAN PATENT APPLICATION**
published in accordance with Art. 153(4) EPC

(43) Date of publication:
25.06.2025 Bulletin 2025/26

(21) Application number: 23854217.9

(22) Date of filing: 28.07.2023

(51) International Patent Classification (IPC):
**G01K 7/02** (2021.01)

(52) Cooperative Patent Classification (CPC):
**G01K 7/02; Y02E 30/30**

(86) International application number:
**PCT/CN2023/109938**

(87) International publication number:
**WO 2024/037313 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 18.08.2022 CN 202211003897

(71) Applicant: Shenzhen First Union Technology Co., Ltd.
Shenzhen, Guangdong 518000 (CN)

(72) Inventors:
• LI, Xinjun
Shenzhen, Guangdong 518000 (CN)
• XU, Zhongli
Shenzhen, Guangdong 518000 (CN)
• LI, Yonghai
Shenzhen, Guangdong 518000 (CN)

(74) Representative: Proi World Intellectual Property GmbH
Obermattweg 12
6052 Hergiswil, Kanton Nidwalden (CH)

(54) **MULTI-POINT TEMPERATURE MEASUREMENT DEVICE, AEROSOL GENERATION DEVICE AND TEMPERATURE CONTROL METHOD**

(57) The present application relates to a multi-point temperature measurement device, an aerosol generation device and a temperature control method. The multi-point temperature measurement device comprises at least two thermocouples, at least two signal processing circuits and a processor, wherein the at least two thermocouples are arranged at different position points on a conductor under test, the thermocouples correspond to the signal processing circuits on a one-to-one basis, and the at least two thermocouples are used for detecting the temperature of said conductor at the different position points. No current flows between any two thermocouples, and any two thermocouples do not influence each other, that is, a first potential signal and a second potential signal, which are obtained by means of any thermocouple, are not interfered with by other thermocouples, such that the temperature detection of different position points on a conductor under test does not influence each other; therefore, the multi-point temperature measurement device can accurately measure the temperature of said conductor at the different position points.

FIG. 2

**Description**

**CROSS-REFERENCE TO RELATED APPLICATIONS**

This application claims priority to Chinese Patent Application No. 202211003897.4, filed with the China National Intellectual Property Administration on August 18, 2022 and entitled "MULTI-POINT TEMPERATURE MEASUREMENT DEVICE, AEROSOL GENERATION DEVICE AND TEMPERATURE CONTROL METHOD", which is incorporated herein by reference in its entirety.

**TECHNICAL FIELD**

This application relates to the field of temperature measurement, and specifically, to a multi-point temperature measurement device, an aerosol generation device and a temperature control method.

**BACKGROUND**

In e-cigarette products, aerosols are generally generated by heating the heating body and transferring the temperature of the heating body to the cigarette. The temperature difference between different positions of the heating body is large, and the temperature of different position points on the heating body can be measured by a thermocouple sensor, so as to achieve the multi-section heating and multi-section temperature control of the heating body according to the measured temperature.

However, in the existing traditional temperature measurement solutions, multiple thermocouple measurement circuits may affect and interfere with each other, resulting in inaccurate measurement results and inability to achieve precise temperature measurement at multiple position points on the heating body.

**SUMMARY**

Embodiments of this application aim to provide a multi-point temperature measurement device, an aerosol generation device and a temperature control method, which can accurately measure the temperature of different position points on a conductor under test.

To resolve the foregoing technical problem, the embodiments of this application provide the following technical solutions:

In a first aspect, an embodiment of this application provides a multi-point temperature measurement device. The multi-point temperature measurement device includes: at least two thermocouples, at least two signal processing circuits, and a processor.

The at least two thermocouples are arranged at different position points on a conductor under test, the thermocouples correspond to the position points on the conductor under test on a one-to-one basis, and the thermocouples correspond to the signal processing circuits on a one-to-one basis.

The thermocouple includes a first electrode and a second electrode. The first electrode is connected with a first input end of the corresponding signal processing circuit, the second electrode is connected with a second input end of the corresponding signal processing circuit, and an output end of the signal processing circuit is connected with the processor.

The thermocouple is configured to detect the temperature of a corresponding position on the conductor under test. A first potential signal is outputted through the first electrode and a second potential signal is outputted through the second electrode. The first potential signal and the second potential signal are processed by the signal processing circuit to obtain a first voltage signal, and the first voltage signal is processed by the processor to obtain the temperature of the corresponding position on the conductor under test.

No current flows between any two of the thermocouples.

In some embodiments, no current dividing circuit is arranged between the first electrode and the first input end of the signal processing circuit, and no current dividing circuit is arranged between the second electrode and the second input end of the signal processing circuit.

In some embodiments, the at least two thermocouples include a first thermocouple and a second thermocouple. No closed loop is formed between the first electrode of the first thermocouple and the second electrode of the second thermocouple, and no closed loop is formed between the second electrode of the first thermocouple and the first electrode of the second thermocouple.

In some embodiments, the signal processing circuit includes a first signal amplification module and a first benchmark voltage module.

An input end of the first benchmark voltage module is connected with a first reference voltage signal, an output end of the first benchmark voltage module is connected with a first input end of the first signal amplification module or a second input end of the first signal amplification module, and the first benchmark voltage module is configured to provide a first benchmark voltage signal.

The first input end of the first signal amplification module is connected with the first electrode, the second input end of the first signal amplification module is connected with the second electrode, and an output end of the first signal amplification module is connected with the processor. The first signal amplification module is configured to amplify a difference between the first potential signal and the second potential signal to obtain a first amplified signal, so that the processor processes the first amplified signal to obtain the temperature of the corresponding position on the conductor under test.

In some embodiments, the multi-point temperature measurement device further includes a first buffer.

An input end of the first buffer is connected with the output end of the first benchmark voltage module, and an output end of the first buffer is connected with the first input end of the first signal amplification module or the second input end of the first signal amplification module. The first buffer is configured to isolate the first benchmark voltage module from the first signal amplification module.

In some embodiments, the signal processing circuit further includes a second signal amplification module.

The second signal amplification module is connected in series between the output end of the first signal amplification module and the processor. A first input end of the second signal amplification module is connected with the output end of the first signal amplification module, a second input end of the second signal amplification module is configured to access the first benchmark voltage signal, and an output end of the second signal amplification module is connected with the processor. The second signal amplification module is configured to amplify a difference between the first amplified signal and the first benchmark voltage signal to obtain a second amplified signal, so that the processor performs processing according to the second amplified signal to obtain the temperature of the corresponding position.

In some embodiments, the signal processing circuit further includes a second benchmark voltage module.

An input end of the second benchmark voltage module is connected with a second reference voltage signal, and an output end of the second benchmark voltage module is connected with the first input end of the first signal amplification module or the second input end of the first signal amplification module. The second benchmark voltage module is configured to provide a second benchmark voltage signal.

The output end of the first benchmark voltage module and the output end of the second benchmark voltage module are respectively connected to different input ends of the first signal amplification module.

In some embodiments, the multi-point temperature measurement device further includes a second buffer.

An input end of the second buffer is connected with the output end of the second benchmark voltage module, and an output end of the second buffer is connected with the first input end of the first signal amplification module or the second input end of the first signal amplification module. The second buffer is configured to isolate the second benchmark voltage module from the first signal amplification module.

In some embodiments, the second reference voltage signal is an adjustable voltage signal.

In a second aspect, an embodiment of this application provides an aerosol generation device. The aerosol generation device includes a heating body configured to heat an aerosol-generation product to generate aerosols, a power source configured to provide power to the heating body, a controller, and the multi-point temperature measurement device described above;

the heating body is a conductor, and the heating body includes multiple heating zone;
the at least two thermocouples are arranged in different heating zones of the heating body; and
the controller is configured to adjust the power provided by the power source to at least one of the heating zones according to the temperature of each heating zone.

In some embodiments, the heating body is a resistive heating body, a semiconductor, a resistive thin film heater, or an infrared thin film heater.

In a second aspect, an embodiment of this application provides a temperature control method applied to an aerosol generation device. The aerosol generation device includes a heating body configured to heat an aerosol-generation product to generate aerosols, a power source configured to provide power to the heating body, a first thermocouple and a second thermocouple respectively arranged at different position points on the heating body, and a controller. No current flows between a positive electrode of the first thermocouple and a negative electrode of the second thermocouple, and no current flows between a negative electrode of the first thermocouple and a positive electrode of the second thermocouple. The method includes:

acquiring a first sampling signal of a first position point on a conductor under test through the first thermocouple;
acquiring a second sampling signal of a second position point on the conductor under test through the second thermocouple;
determining the temperature of the first position point and the temperature of the second position point respectively according to the first sampling signal and the second sampling signal; and

adjusting the power output of the heating body according to the temperature of the first position point and the temperature of the second position point.

**In** some embodiments, the determining the temperature of the first position point and the temperature of the second position point respectively according to the first sampling signal and the second sampling signal includes:

loading a first benchmark voltage signal onto the first sampling signal and the second sampling signal respectively to obtain a first signal and a second signal;

amplifying the first signal and the second signal respectively to obtain a third amplified signal and a fourth amplified signal; and

determining the temperature of the first position point and the temperature of the second position point respectively according to the third amplified signal and the fourth amplified signal.

In some embodiments, the determining the temperature of the first position point and the temperature of the second position point respectively according to the third amplified signal and the fourth amplified signal includes:

amplifying a difference between the third amplified signal and the first benchmark voltage signal to obtain a fifth amplified signal;

amplifying a difference between the fourth amplified signal and the first benchmark voltage signal to obtain a sixth amplified signal; and

determining the temperature of the first position point and the temperature of the second position point respectively according to the fifth amplified signal and the sixth amplified signal.

In some embodiments, the determining the temperature of the first position point and the temperature of the second position point respectively according to the first sampling signal and the second sampling signal further includes:

loading both a first benchmark voltage signal and a second benchmark voltage signal onto the first sampling signal to obtain a third signal;

loading both the first benchmark voltage signal and the second benchmark voltage signal onto the second sampling signal to obtain a fourth signal;

amplifying the third signal and the fourth signal respectively to obtain a seventh amplified signal and an eighth amplified signal; and

determining the temperature of the first position point and the temperature of the second position point respectively according to the seventh amplified signal and the eighth amplified signal.

In each embodiment of this application, the multi-point temperature measurement device includes at least two thermocouples, at least two signal processing circuits and a processor, where the at least two thermocouples are arranged at different position points on a conductor under test, the thermocouples correspond to the signal processing circuits on a one-to-one basis, and the at least two thermocouples are configured to detect the temperature of the different position points on the conductor under test. Each thermocouple outputs a first potential signal and a second potential signal, the first potential signal and the second potential signal are then processed by the corresponding signal processing circuit to obtain a corresponding first voltage signal, and the first voltage signal is processed by the processor to obtain the temperature of the corresponding position on the conductor under test. In addition, no current flows between any two thermocouples, and any two thermocouples do not affect each other, that is, a first potential signal and a second potential signal, which are acquired by means of any thermocouple, are not interfered with by other thermocouples, such that the temperature detection of different position points on a conductor under test does not affect each other. Therefore, the multi-point temperature measurement device can accurately measure the temperature of the conductor under test at different position points.

## BRIEF DESCRIPTION OF THE DRAWINGS

One or more embodiments are exemplarily described with reference to the corresponding figures in the accompanying drawings, and the exemplary descriptions are not to be construed as limiting the embodiments. Elements in the accompanying drawings that have same reference numerals are represented as similar elements, and unless otherwise particularly stated, the figures in the accompanying drawings are not drawn to scale.

FIG. 1a is a schematic structural diagram of an aerosol generation device according to an embodiment of this application;

FIG. 1b is a schematic structural diagram of a circuit of an aerosol generation device according to an embodiment of this application;

FIG. 2 is a schematic structural diagram of a multi-point temperature measurement device according to an embodiment of this application;

FIG. 3 is a schematic structural diagram of a multi-point temperature measurement device according to an embodiment of this application;

FIG. 4 is a schematic structural diagram of a multi-point temperature measurement device according to an embodiment of this application;

FIG. 5 is a schematic structural diagram of a multi-point temperature measurement device according to an embodiment of this application;

FIG. 6 is a schematic structural diagram of a circuit of a multi-point temperature measurement device according to an embodiment of this application;

FIG. 7 is a schematic structural diagram of a circuit of a multi-point temperature measurement device according to an embodiment of this application;

FIG. 8 is a schematic structural diagram of a circuit of a multi-point temperature measurement device according to an embodiment of this application;

FIG. 9 is a schematic flowchart of a temperature control method according to an embodiment of this application;

FIG. 10 is a schematic flowchart of Step S93 in FIG. 9;

FIG. 11 is a schematic flowchart of Step S933 in FIG. 10; and

FIG. 12 is another schematic flowchart of Step S93 in FIG. 9.

## DETAILED DESCRIPTION

To make the objectives, technical solutions, and advantages of this application clearer, the following further describes this application in detail with reference to the accompanying drawings and embodiments. It should be understood that the specific embodiments described herein are merely used for explaining this application but are not intended to limit this application.

The term "aerosol-generation product" refers to a material that provides volatile components in the form of aerosols when heated. In some embodiments, the aerosol-generation product may include tobacco components, where the tobacco components are any material including tobacco or its derivatives. The tobacco components may include one or more of crushed tobacco, tobacco fibers, cut tobacco, pressed tobacco, tobacco stems, tobacco sheets and/or tobacco extracts. In some embodiments, the aerosol-generation product may include tobacco substitutes.

Aerosol generation device refers to any apparatus that generates aerosols from the aerosol-generation product when in use. Specifically, an apparatus is known and heats the aerosol-generation product to form inhalable aerosols without burning or igniting the aerosol-generation product. This type of apparatus is sometimes described as a "heat-not-burn" apparatus, or a "tobacco heating product", or a "tobacco heating device", or a similar object.

Similarly, there are also so-called e-cigarette devices that typically vaporize aerosol-generation products in liquid form, which may contain or not contain nicotine. In other embodiments, the aerosol-generation device provides aerosols or vapors by heating aerosol-generation products in solid form. In specific embodiments, the aerosol generation device is a tobacco heating product.

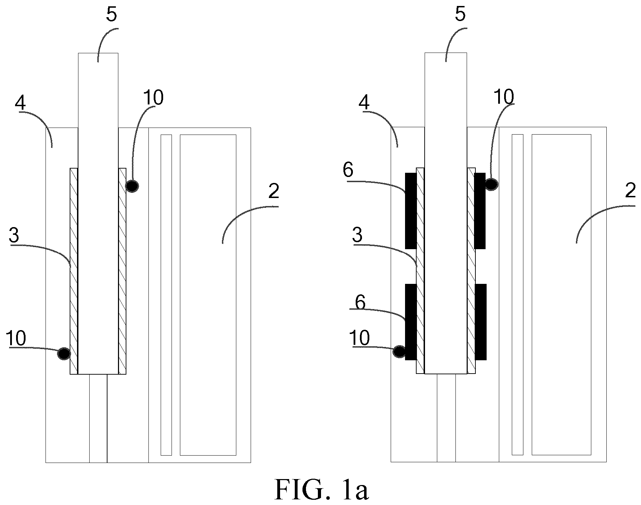

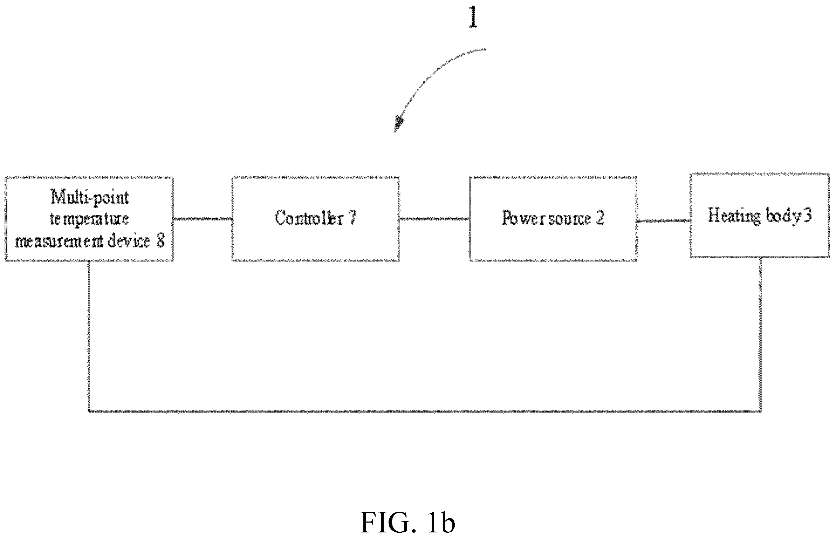

Please refer to FIG. 1a to FIG. 1b, FIG. 1a is a schematic structural diagram of an aerosol generation device according to an embodiment of this application, and FIG. 1b is a schematic structural diagram of a circuit of an aerosol generation device according to an embodiment of this application. As shown in FIG. 1a to FIG. 1b, an aerosol generation device 1 includes a heating body 3, a power source 2, a controller 7, and a multi-point temperature measurement device 8.

The heating body 3 is configured to heat an aerosol-generation product 5 to generate aerosols. The aerosol-generation product 5 may be stored in a heating chamber 4, so that the aerosol-generation product 5 can be heated in the heating chamber 4. For example, the heating chamber 4 may be arranged close to the heating body 3, so that the thermal energy from the heating body 3 heats the aerosol-generation product 5 therein to volatilize aerosols without burning the aerosol-generation product 5.

The heating body 3 may include a generally cylindrical elongated heating body 3, and the heating chamber 4 is located around a circumferential longitudinal surface of the heating body 3. Therefore, the heating chamber 4 and the aerosol-generation product 5 include coaxial layers surrounding the heating body 3. However, in other embodiments, a heating body 3 and a heating chamber 4 in other shapes and configurations may be selectively used.

The heating body 3 may optionally include multiple separate heating zones 6. The heating zones 6 may operatively independent of each other, so that different zones 6 can be activated at different times to heat the aerosol-generation product 5. The heating zones 6 may be arranged in any geometric arrangement in the heating body 3. However, in the illustrated example, the heating zones 6 are arranged geometrically in the heating body 3, so that different heating zones 6 among the heating zones 6 are arranged to primarily and independently heat different areas of the aerosol-generation product 5.

The heating body 3 may be a resistive heating body, which refers to that resistance in the heating body 3 converts electrical energy into thermal energy when current is applied to the heating body 3, and the thermal energy heats the aerosol-generation product 5. The heating body 3 may be in the form of a resistance wire, a mesh, a coil, and/or multiple wires. In some embodiments, the heating body 3 may be a thin film heater, such as a resistive thin film heater or an infrared thin film heater.

The heating body 3 may also be a conductor or a semiconductor, which may include metals or metal alloys. Metals are excellent conductors of electrical energy and thermal energy. Suitable metals include, but not limited to, copper, aluminum, platinum, tungsten, gold, silver, and titanium. Suitable metal alloys include, but not limited to, nickel-chromium alloy and stainless steel.

The heating body 3 may also be an electromagnet. Variable current flows through the electromagnet to generate a variable magnetic field. The variable magnetic field causes one or more eddy currents to be generated inside the heating body 3, thus heating the heating body 3.

The aerosol generation device 1 further includes a power source 2. The power source 2 is electrically connected with the heating body 3 and is configured to provide power to the heating body 3. It may be a power source for providing power to the heating body 3, such as a lithium-ion battery, a nickel battery, an alkaline battery, and/or any other battery. When needed, the power source 2 may provide electrical energy to the heating body 3.

The power source 2 is further electrically connected with the controller 7, so that the controller 7 adjusts the power outputted by the power source 2. The power outputted by the power source 2 may be adjusted by directly setting a power value, and the power outputted by the power source 2 may also be controlled through the form of PWM waves, which is not limited in this application. The controller 7 can control the temperature of each heating zone 6 in the heating body 3 and thus control the generation of aerosols by adjusting the power outputted by the power source 2 to at least one heating zone 6 in the heating body 3. The controller may be configured at any suitable position in the aerosol generation device 1.

In some embodiments, the controller 7 may be a general-purpose processor, a Digital Signal Processor (DSP), an Application Specific Integrated Circuit (ASIC), a Field Programmable Gate Array (FPGA), a singlechip, an ARM (Acorn RISC Machine) or any other programmable logic device, a discrete gate or transistor logic, a discrete hardware component, or any combination of these components. In addition, the controller 7 may also be any traditional processor, controller, microcontroller, or state machine. The controller 7 may also be implemented as a combination of computing apparatus, such as a combination of DSP and microprocessor, multiple microprocessors, one or more microprocessors combined with DSP, and/or any other such configuration. The controller 7 may also be a frequency conversion board or main control board of a washing machine.

In order to accurately control the thermal output of the heating body 3, the aerosol generation device 1 further includes the multi-point temperature measurement device 8. The multi-point temperature measurement device 8 is configured to detect the temperature of different position points on the heating body 3, and may be arranged at any suitable position in the aerosol generation device 1. The multi-point temperature measurement device 8 includes at least two thermocouples 10. The at least two thermocouples 10 are arranged at different positions on the heating body 3. The thermocouples 10 correspond to the position points on the heating body 3 on a one-to-one basis. Specifically, the thermocouples 10 may be arranged in the heating zones 6 on the heating body 3, and correspond to the heating zones 6 on a one-to-one basis.

The thermocouples 10 serve as temperature sensors and are configured to detect the temperature of each position point on the heating body 3. Since the heating body 3 is a conductive conductor, mutual impact is easily caused when a thermocouple 10 detects the temperature of a position point, and a closed loop is formed between the thermocouples, causing a detection signal of the thermocouple 10 to be interfered with by other thermocouples, so that the acquired detection signal is not accurate and the temperature detection of multiple position points on the heating body 3 performed by the multi-point temperature measurement device 8 is not accurate.

Based on the above reason, an embodiment of this application provides a multi-point temperature measurement device. The multi-point temperature measurement device includes at least two thermocouples, at least two signal processing circuits, and a processor. The at least two thermocouples are arranged at different position points on a conductor under test. The thermocouples correspond to the signal processing circuits on a one-to-one basis. The at least two thermocouples are configured to detect the temperature of the different position points on the conductor under test. Each thermocouple outputs a first potential signal and a second potential signal, the first potential signal and the second potential signal are then processed by the corresponding signal processing circuit to obtain a corresponding first voltage signal, and the first voltage signal is processed by the processor to obtain the temperature of the corresponding position on the conductor under test. In addition, no current flows between any two thermocouples, and any two thermocouples do not affect each other, that is, a first potential signal and a second potential signal, which are acquired by means of any thermocouple, are not interfered with by other thermocouples, such that the temperature detection of different position points on a conductor under test does not affect each other. Therefore, the multi-point temperature measurement device can accurately measure the temperature of the conductor under test at different position points.

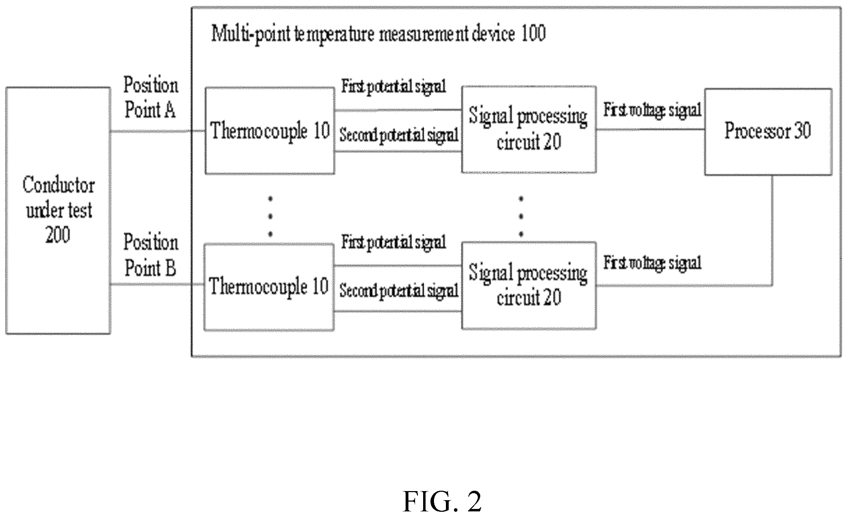

Please refer to FIG. 2, FIG. 2 is a schematic structural diagram of a multi-point temperature measurement device according to an embodiment of this application. A multi-point temperature measurement device 100 is applied to the aerosol generation device 1. As shown in FIG. 2, the multi-point temperature measurement device 100 includes at least two thermocouples 10, at least two signal processing circuits 20, and a processor 30.

The at least two thermocouples 10 are arranged at different position points on a conductor under test 200. The thermocouples 10 correspond to the position points on the conductor under test 200 on a one-to-one basis. The thermocouples 10 correspond to the signal processing circuits 20 on a one-to-one basis. For example, a first thermocouple 10 corresponds to a Position Point A on the conductor under test 200, and a second thermocouple 10 corresponds to a Position Point B on the conductor under test 200.

The thermocouple 10 includes a first electrode and a second electrode. The first electrode is connected with a first input end of the corresponding signal processing circuit 20. The second electrode is connected with a second input end of the corresponding signal processing circuit 20. An output end of the signal processing circuit 20 is connected with the processor 30.

The thermocouple 10 is configured to detect the temperature of a corresponding position on the conductor under test 200. A first potential signal is outputted through the first electrode and a second potential signal is outputted through the second electrode. The first potential signal and the second potential signal are processed by the signal processing circuit 20 to obtain a first voltage signal. The first voltage signal is processed by the processor 30 to obtain the temperature of the corresponding position on the conductor under test 200.

Moreover, no current flows between any two of the thermocouples 10, that is, any two thermocouples 10 do not affect each other. There are various ways to achieve no current flowing between any two thermocouples 10. For example, no current dividing circuit is arranged between the first electrode and the first input end of the signal processing circuit 20, and no current dividing circuit is arranged between the second electrode and the second input end of the signal processing circuit 20. Alternatively, no closed loop is formed between the first electrode of one thermocouple 10 and the second electrode of any other thermocouple 10, and no closed loop is formed between the second electrode of one thermocouple 10 and the first electrode of any other thermocouple 10. **In** a case that the at least two thermocouples include a first thermocouple and a second thermocouple, no closed loop is formed between the first electrode of the first thermocouple and the second electrode of the second thermocouple, and no closed loop is formed between the second electrode of the first thermocouple and the first electrode of the second thermocouple.

There are various ways to achieve the effect that no current flows between any two thermocouples 10. For example, if both the first electrode and the second electrode of one thermocouple 10 are not grounded, it is impossible to form a closed loop with the other thermocouple 10 through the ground; or if a large capacitor is connected between the first electrode of one thermocouple 10 and the ground or the other thermocouple 10, or if a large capacitor is connected between the second electrode of one thermocouple 10 and the ground or the other thermocouple 10, the DC resistance characteristic of the large capacitor is utilized to resist the flow of the first potential signal and to resist the flow of the second potential signal; or if a large resistor is connected between the first electrode of one thermocouple 10 and the ground or the other thermocouple 10, and a large resistor is connected between the second electrode of the thermocouple 10 and the ground or the other thermocouple 10, the large resistor plays a role in limiting the current to resist the flow of the first potential signal, and to resist the flow of the second potential signal. In addition, an isolating member may also be arranged between the first electrode and the other thermocouple 10, and an isolating member may be arranged between the second electrode and the other thermocouple 10 to isolate the signal flow between the first electrode and the other thermocouple 10 and to isolate the signal flow between the second electrode and the other thermocouple 10, thus achieving the effect that no current flows between the two thermocouples 10.

To sum up, in the multi-point temperature measurement device 100, the first potential signal and the second potential signal, which are acquired by means of any thermocouple 10, are not interfered with by other thermocouples 10, such that the temperature detection of different position points on the conductor under test 200 does not affect each other. Therefore, the multi-point temperature measurement device 100 can accurately measure the temperature of the conductor under test 200 at different position points.

The signal processing circuits 20 correspond to the thermocouples 10 on a one-to-one basis, and are each configured to process the first potential signal and the second potential signal of the corresponding thermocouple 10 to obtain a first voltage signal, so that the processor 30 can obtain the temperature of the corresponding position on the conductor under test 200 according to the first voltage signal. Therefore, the processing of the first potential signal and the second potential signal by the signal processing circuit 20 can also improve the accuracy of temperature detection. In this embodiment of this application, the signal processing circuit 20 may amplify the first potential signal and the second potential signal, so that the processor 30 can process the first voltage signal more accurately.

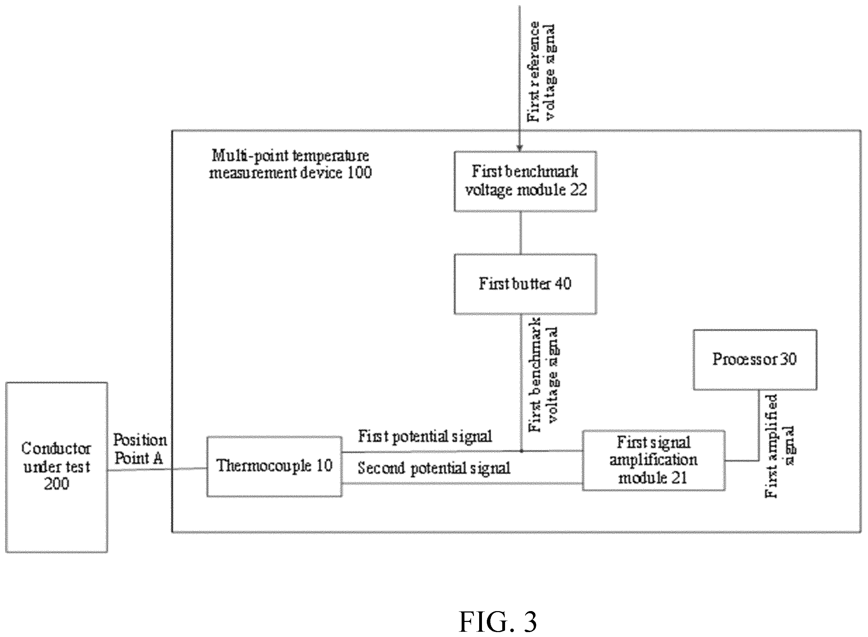

Specifically, please refer to FIG. 3, FIG. 3 is a schematic structural diagram of a multi-point temperature measurement device according to an embodiment of this application. As shown in FIG. 3, the signal processing circuit 20 includes a first signal amplification module 21 and a first benchmark voltage module 22.

An input end of the first benchmark voltage module 22 is connected with a first reference voltage signal. An output end of the first benchmark voltage module 22 is connected with a first input end of the first signal amplification module 21 or a second input end of the first signal amplification module 21 (illustration is provided by taking the output end of the first benchmark voltage module 22 being connected with the first input end of the first signal amplification module 21 as an example).

The first input end of the first signal amplification module 21 is connected with the first electrode. The second input end of the first signal amplification module 21 is connected with the second electrode. An output end of the first signal amplification module 21 is connected with the processor 30.

The first signal amplification module 21 amplifies a difference between the first potential signal and the second potential signal to obtain a first amplified signal, so that the processor 30 processes the first amplified signal to obtain the temperature of the corresponding position on the conductor under test 200.

The first signal amplification module 21 may be a non-inverting amplifier or a differential amplifier. The amplification gain of each amplifier may be set according to the need. In this embodiment of this application, if the first signal amplification module 21 is a non-inverting amplifier, the gain of the non-inverting amplifier may be 100; and if the first signal amplification module 21 is a differential amplifier, the gain of the differential amplifier may be 101.

The first signal amplification module 21 amplifies the difference between the first potential signal and the second potential signal, so that the processor 30 can process the amplified signal and more accurately obtain the temperature of the corresponding position on the conductor under test 200.

The first benchmark voltage module 22 provides a first benchmark voltage signal. The first benchmark voltage signal can be loaded onto the first input end or the second input end of the first signal amplification module 21. The first benchmark voltage signal provides a bias voltage for the first signal amplification module 21. If the first signal amplification module 21 does not have a bias voltage, then when the difference between the first potential signal and the second potential signal of the thermocouple 10 is close to 0 V or negative voltage, such as in normal temperature or negative temperature environments, the output of the first signal amplification module 21 is close to O, and the output of the first signal amplification module 21 is incorrect and cannot reflect the correct temperature. Therefore, the first benchmark voltage signal can enable the first signal amplification module 21 to accurately output the first amplified signal even in normal temperature or negative temperature environments.

If there is no first benchmark voltage signal to provide bias voltage for the first signal amplification module 21, positive and negative dual power supply may also be provided for the first signal amplification module 21, so that the first signal amplification module 21 can accurately output the first amplified signal.

The first benchmark voltage module 22 may be obtained through a separate benchmark voltage source, for example, obtained through REF3025/3012/431 voltage division. It may also be obtained through voltage division or corresponding processing after the controller 7 or the processor 30 outputs an adjustable voltage signal.

The voltage of the first benchmark voltage signal may be set according to the need. In this embodiment of this application, its voltage is 1 V. Correspondingly, the output of the first signal amplification module 21 is $A1*Vth+1$, where A1 is the amplification gain of the first signal amplification module 21 and Vth is the difference between the first potential signal and the second potential signal.

Please continuously refer to FIG. 3, the multi-point temperature measurement device 100 further includes a first buffer 40. An input end of the first buffer 40 is connected with the output end of the first benchmark voltage module 22. An output end of the first buffer 40 is connected with the first input end of the first signal amplification module 21 or the second input end of the first signal amplification module 21.

The first buffer 40 is configured to isolate the first benchmark voltage module 22 from the first signal amplification module 21. The first buffer 40 may be a follower, which has the characteristics of high input impedance and low output impedance. In this embodiment of this application, the first buffer 40 isolates the first benchmark voltage module 22 from the first signal amplification module 21, so that the amplification factor of the first signal amplification module 21 is not affected by the output resistance of the first benchmark voltage module 22, so that the first benchmark voltage module 22 can provide an accurate first benchmark voltage signal for the first signal amplification module 21, that is, provide an accurate bias voltage, thus further improving the accuracy of temperature detection.

The first benchmark voltage signal can enable the first signal amplification module 21 to output the correct first amplified signal in normal temperature or negative temperature environments, thus improving the accuracy of temperature detection. However, the first benchmark voltage signal may also affect the output of the first signal amplification module 21, causing the first amplified signal to contain the first benchmark voltage signal. Therefore, a technical solution of two-stage amplification may be adopted to eliminate the impact of the first benchmark voltage signal.

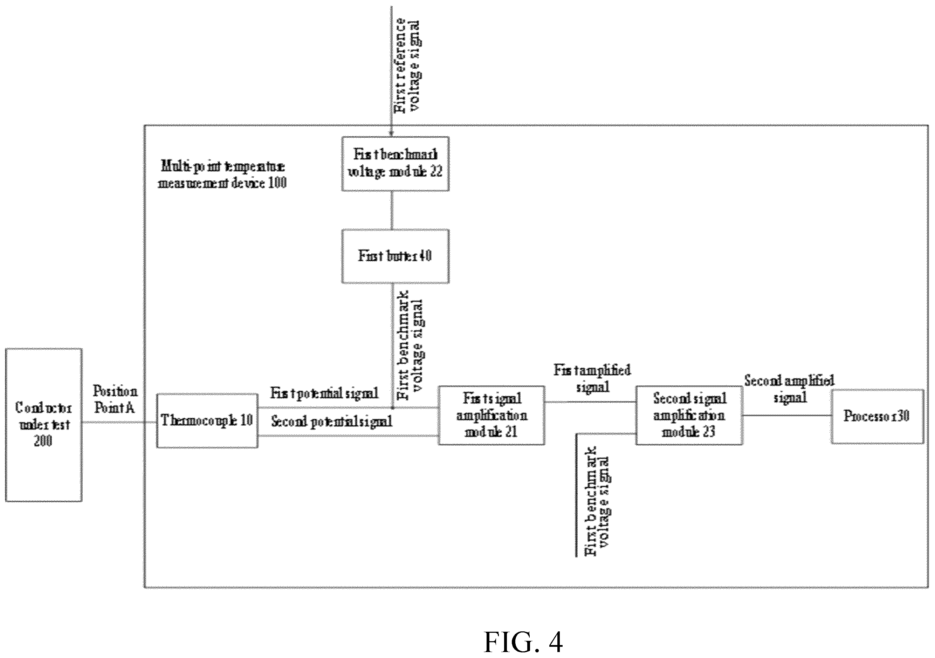

Specifically, please refer to FIG. 4, FIG. 4 is a schematic structural diagram of a multi-point temperature measurement device according to an embodiment of this application. As shown in FIG. 4, the difference from the multi-point temperature measurement device 100 in FIG. 3 is that the signal processing circuit 20 further includes a second signal amplification module 23.

The second signal amplification module 23 is connected in series between the output end of the first signal amplification module 21 and the processor 30. A first input end of the second signal amplification module 23 is connected with the output end of the first signal amplification module 21. A second input end of the second signal amplification module 23 is configured to access the first benchmark voltage signal. An output end of the second signal amplification module 23 is connected with the processor 30.

The second signal amplification module 23 amplifies a difference between the first amplified signal and the first benchmark voltage signal to obtain a second amplified signal, so that the processor 30 performs processing according to the second amplified signal to obtain the temperature of the corresponding position.

The second signal amplification module 23 takes the difference between the first amplified signal and the first benchmark voltage signal as an input signal, and amplifies the difference to obtain the second amplified signal. Therefore, the impact caused by the first benchmark voltage signal has been eliminated in the second amplified signal, so that the multi-point temperature measurement device 100 can more accurately measure the temperature of each position point on the conductor under test 200.

In some embodiments, when sampling temperature signals through the thermocouples 10, directly amplifying the temperature signals using the amplification modules, and then processing the amplified signals through the processor 30 to obtain the temperature of each position point on the conductor under test 200, there may be problems of low temperature measurement accuracy and narrow measurement range. Because when in a high temperature zone, a potential difference between the first potential signal and the second potential signal at two ends of the thermocouple 10 is relatively large. Due to the limited amplification factor, in order to prevent the output of the signal amplification module from approaching its supply voltage and reaching full value, which results in that the output voltage resolution of an operational amplifier output module is low, the processor 30 requires an analog-to-digital converter with higher precision. Moreover, the measurement range is also limited due to the fixed amplification factor. Alternatively, the temperature measurement accuracy can only be limited to a certain temperature range, and cannot achieve higher accuracy throughout the entire range. Therefore, some thermocouple temperature measurement solutions cannot guarantee measurement accuracy and wide measurement range at the same time.

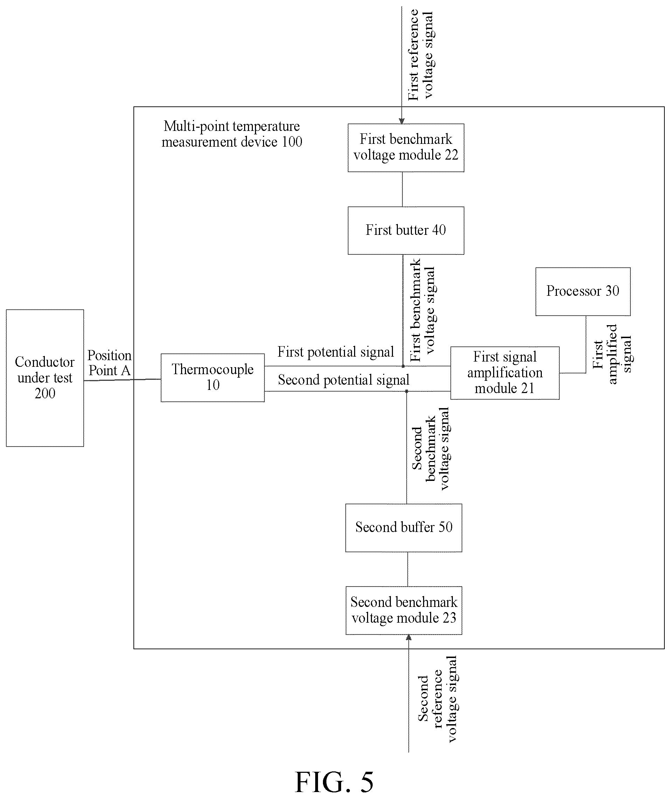

Based on the above reason, please refer to FIG. 5, FIG. 5 is a schematic structural diagram of a multi-point temperature measurement device according to an embodiment of this application. As shown in FIG. 5, the signal processing circuit 20 further includes a second benchmark voltage module 23.

An input end of the second benchmark voltage module 23 is connected with a second reference voltage signal. An output end of the second benchmark voltage module 23 is connected with the first input end of the first signal amplification module 21 or the second input end of the first signal amplification module 21.

The second benchmark voltage module 23 provides a second benchmark voltage signal. The second benchmark voltage signal is loaded onto the first input end of the first signal amplification module 21 or the second input end of the first signal amplification module 21.

The second reference voltage signal and the first reference voltage signal are both adjustable voltage signals. The second reference voltage signal may be a voltage signal outputted by the processor 30 through a digital-to-analog conversion end, or may be an independent reference source, for example, obtained through REF3025/3012/431 voltage division. Similar to the second reference voltage signal, the first reference voltage signal may also be an adjustable voltage signal.

It should be noted that the output end of the first benchmark voltage module 22 and the output end of the second benchmark voltage module 23 are respectively connected to different input ends of the first signal amplification module 21. Illustration is provided by taking the first benchmark voltage signal being loaded onto the first input end of the first signal amplification module 21 and the second benchmark voltage signal being loaded onto the second input end of the first signal amplification module 21 as an example.

That is, if the first benchmark voltage signal is loaded onto the first input end of the first signal amplification module 21, the second benchmark voltage signal is loaded onto the second input end of the first signal amplification module 21; and if the first benchmark voltage signal is loaded onto the second input end of the first signal amplification module 21, the second benchmark voltage signal is loaded onto the first input end of the first signal amplification module 21.

Therefore, both of the two input ends of the first signal amplification module 21 have benchmark voltage signals. By adjusting the voltage value of the benchmark voltage signal, the output end of the first signal amplification module 21 can always maintain a relatively appropriate value, thus achieving accurate measurement over a wide temperature range. Moreover, within the wide temperature range, the first signal amplification module 21 can always maintain a relatively high amplification factor, thus making the voltage resolution of the outputted amplified signal higher.

In some embodiments, continuously referring to FIG. 5, the multi-point temperature measurement device 100 further includes a second buffer 50. An input end of the second buffer 50 is connected with the output end of the second benchmark voltage module 23. An output end of the second buffer 50 is connected with the first input end of the first signal amplification module 21 or the second input end of the first signal amplification module 21.

The second buffer 50 is configured to isolate the second benchmark voltage module 23 from the first signal amplification module 21.

The second buffer 50 may be a follower, which has the characteristics of high input impedance and low output impedance. In this embodiment of this application, the second buffer 50 isolates the second benchmark voltage module 23 from the first signal amplification module 21, so that the amplification factor of the first signal amplification module 21 is not affected by the output resistance of the second benchmark voltage module 23, so that the second benchmark voltage module 23 can provide an accurate second benchmark voltage signal for the first signal amplification module 21.

It should be noted that, in the above embodiment, the output end of the first signal amplification module 21 or the output end of the second signal amplification module 23 may be connected with a filtering module to filter the first amplified signal or the second amplified signal to eliminate high-frequency noise signals therein. A filtering module may also be connected to the input end of the first signal amplification module 21 or the input end of the second signal amplification module 23 to filter the first potential signal or the second potential signal, as well as to filter the first benchmark voltage signal or the second benchmark voltage signal, thus further improving the accuracy of temperature detection.

Each filtering module may be implemented in various forms, such as passive filtering or active filtering. In this embodiment of this application, the filtering module may adopt passive filtering, which is more cost-effective. Filtering may be achieved through a low-pass filter, such as RC filter.

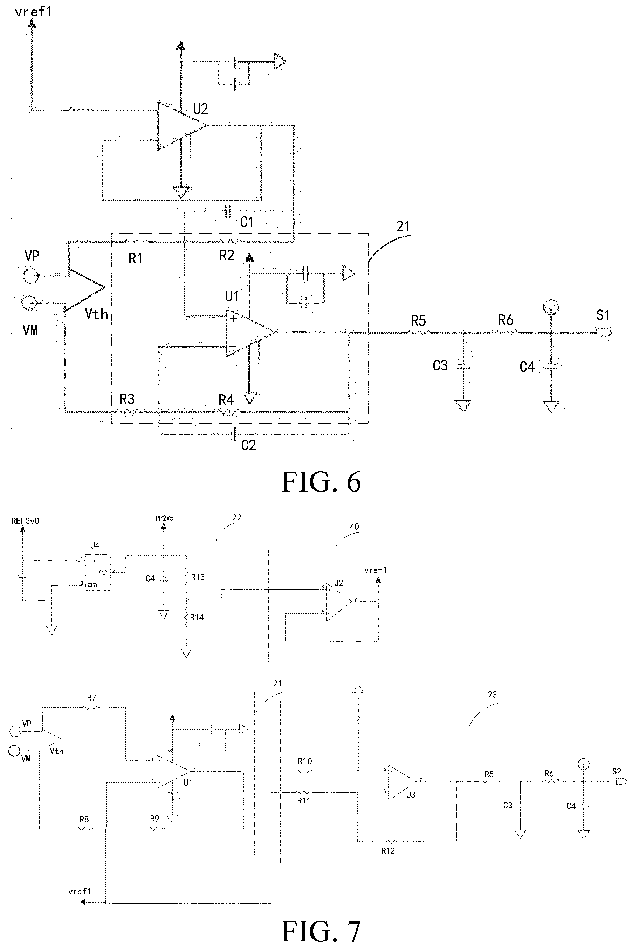

Please refer to FIG. 6, FIG. 6 is a schematic structural diagram of a circuit of a multi-point temperature measurement device according to an embodiment of this application. As shown in FIG. 6, the first signal amplification module 21 includes a first amplifier U1, a first resistor R1, a second resistor R2, a third resistor R3, and a fourth resistor R4. The first benchmark voltage module 22 includes a benchmark voltage source (not shown). The first buffer 40 is a first voltage follower U2.

The first reference voltage signal passes through the benchmark voltage source and then is subjected to voltage division to obtain a first benchmark voltage signal vref1. The first benchmark voltage signal vref1 is connected to a non-inverting input end of the first voltage follower U2 through a resistor. An inverting input end of the first voltage follower U2 is connected with an output end thereof. An output end of the first voltage follower U2 is also connected with one end of the second resistor R2.

A non-inverting input end of the first amplifier U1 is respectively connected with one end of the first resistor R1 and the other end of the second resistor R2.

The other end of the first resistor R1 is connected with the first electrode VP of the thermocouple 10. An inverting input end of the first amplifier U1 is respectively connected with one end of the third resistor R3 and one end of the fourth resistor R4. The other end of the third resistor R3 is connected with the second electrode VM of thermocouple 10. The other end of the fourth resistor R4 is connected with an output end of the first amplifier U1.

The signal processing circuit 20 further includes a first capacitor C1 and a second capacitor C2. The first capacitor C1 is connected in series between the output end of the first voltage follower U2 and the non-inverting input end of the first amplifier U1. The second capacitor C2 is connected in series between the inverting input end of the first amplifier U1 and the output end of the first amplifier U1. The first capacitor C1 is configured to filter the first benchmark voltage signal vref1. The second capacitor C2 is configured to filter out high-frequency noise signals in the second potential signal.

The signal processing circuit 20 may further include a first filtering module. The first filtering module includes a fifth resistor R5, a sixth resistor R6, a third capacitor C3, and a fourth capacitor C4. One end of the fifth resistor R5 is connected with the output end of the first amplifier U1. The other end of the fifth resistor R5 is respectively connected with one end of the sixth resistor R6 and one end of the third capacitor C3. The other end of the sixth resistor R6 is respectively connected with one end of the fourth capacitor C4 and the processor 30. The other end of the third capacitor C3 and the other end of the fourth capacitor C4 are both grounded.

The thermocouple 10 is arranged at a particular position point on the conductor under test 200. The first electrode VP of the thermocouple 10 outputs the first potential signal. The second electrode VM of the thermocouple 10 outputs the second potential signal. The first benchmark voltage signal vref1 is loaded onto the non-inverting input end of the first amplifier U1. The first amplifier U1 amplifies the difference between the first potential signal and the second potential signal to obtain a first amplified signal S1. After the first amplified signal S1 is filtered by the first filtering module, the processor 30 processes and analyzes the first amplified signal S1 subjected to filtering to obtain the temperature of the corresponding position on the conductor under test 200.

The first electrode VP and the second electrode VM of each thermocouple 10 are directly and respectively connected with the non-inverting input end and the inverting input end of the first amplifier U1. The first electrode VP and the second electrode VM of each thermocouple 10 are not grounded, so no current dividing circuit is arranged between the first electrode VP and the non-inverting input end of the first amplifier U1, and no current dividing circuit is arranged between the second electrode VM and the inverting input end of the first amplifier U1. The potential difference between the first electrode VP and the second electrode VM of each thermocouple 10 is not interfered with by other circuits.

Therefore, any two thermocouples 10 do not affect or interfere with each other, so that each thermocouple 10 can accurately detect the temperature of the corresponding position, so that the multi-point temperature measurement device 100 can accurately detect the temperature of the conductor under test 200 at multiple positions.

Please refer to FIG. 7, FIG. 7 is a schematic structural diagram of a circuit of a multi-point temperature measurement device according to an embodiment of this application. As shown in FIG. 7, the first signal amplification module 21 includes the first amplifier U1, a seventh resistor R7, an eighth resistor R8, and a ninth resistor R9. One end of the seventh resistor R7 is connected with the first electrode VP of the thermocouple 10. The other end of the seventh resistor R7 is connected with the non-inverting input end of the first amplifier U1. The second electrode VM of the thermocouple 10 is connected with one end of the eighth resistor R8. The other end of the eighth resistor R8 is respectively connected with one end of the ninth resistor R9 and the inverting input end of the first amplifier U1. The other end of the ninth resistor R9 is connected with the output end of the first amplifier U1.

The first benchmark voltage signal vref1 is loaded onto the inverting input end of the first amplifier U1.

The second signal amplification module 23 includes a tenth resistor R10, an eleventh resistor R11, a twelfth resistor R12, and a second amplifier U3. One end of the tenth resistor R10 is connected with the output end of the first amplifier U1. The other end of the tenth resistor R10 is connected with a non-inverting input end of the second amplifier U3. One end of the eleventh resistor R11 is connected with the first benchmark voltage signal vref1. The other end of the eleventh resistor R11 is connected with an inverting input end of the second amplifier U3. The twelfth resistor R12 is connected in series between the inverting input end and an output end of the second amplifier U3. The output end of the second amplifier U3 is further connected with the first filtering module. A second amplified signal S2 outputted by the second amplifier U3 is filtered by the first filtering module, then transmitted to the processor 30, and processed and analyzed by the processor 30 to obtain the temperature of the corresponding position on the conductor under test 200.

The first benchmark voltage module 22 includes a reference source U4, a fourth capacitor C4, a thirteenth resistor R13, and a fourteenth resistor R14. A first reference voltage signal REF3V0 is connected with an input end of the reference source U4. An output end of the reference source U4 is respectively connected with one end of the fourth capacitor C4 and one end of the thirteenth resistor R13. The other end of the fourth capacitor C4 is grounded. The other end of the thirteenth resistor R13 is respectively connected with one end of the fourteenth resistor R14 and the non-inverting input end of the first voltage follower U2. The other end of the fourteenth resistor R14 is grounded. The output end of the first voltage follower U2 outputs the first benchmark voltage signal vref1.

The first reference voltage signal REF3V0 outputs a voltage signal PP2V5 through the reference source U4. The voltage signal PP2V5 is subjected to voltage division by the thirteenth resistor R13 and the fourteenth resistor R14 to obtain the first benchmark voltage signal vref1. The voltage of the first reference voltage signal REF3V0 is 3 V. The voltage of the first benchmark voltage signal vref1 is 1 V. The first benchmark voltage signal vref1 is respectively loaded onto the inverting input end of the first amplifier U1 and the inverting input end of the second amplifier U3.

The first amplifier U1 amplifies the difference between the first potential signal and the second potential signal of the thermocouple 10 to obtain the first amplified signal S1. The voltage of the first amplified signal S1 is A1*Vth+1, where A1 is the amplification gain of the first signal amplifier, Vth is the difference between the first potential signal and the second potential signal, and 1 is the voltage of the first benchmark voltage signal vref1.

The second amplifier U3 amplifies the difference between the first amplified signal S1 and the first benchmark voltage signal vref1 to obtain the second amplified signal S2. The voltage of the second amplified signal S2 is A2*(A1*Vth), where A2 is the amplification gain of the second signal amplifier.

The second amplified signal S2 is filtered by the first filtering module, and then processed and analyzed by the processor 30 to obtain the temperature of the corresponding position on the conductor under test 200.

In the multi-point temperature measurement device 100, the second amplifier U3 is added on the basis of the first amplifier U1, the first benchmark voltage signal vref1 is respectively loaded onto the inverting input end of the first amplifier U1 and the inverting input end of the second amplifier U3, and the impact of the first benchmark voltage signal vref1 is eliminated through the second amplifier U3, so that the signal processed by the processor 30 is only related to the difference between the first potential signal and the second potential signal of the thermocouple 10, thus further improving the detection accuracy of the multi-point temperature measurement device 100.

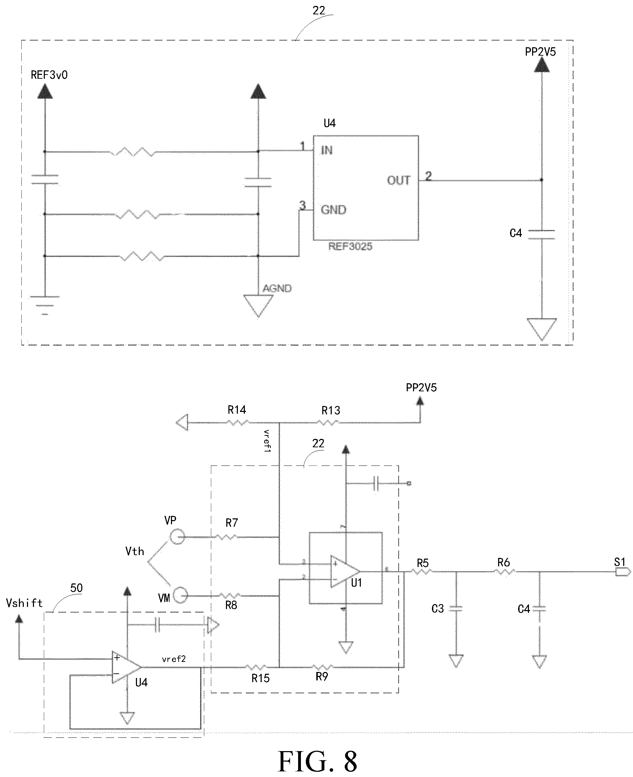

Please refer to FIG. 8, FIG. 8 is a schematic structural diagram of a circuit of a multi-point temperature measurement device according to an embodiment of this application. As shown in FIG. 8, the first signal amplification module 21 includes the first amplifier U1, the seventh resistor R7, the eighth resistor R8, and the ninth resistor R9. One end of the seventh resistor R7 is connected with the first electrode VP of the thermocouple 10. The other end of the seventh resistor R7 is connected with the non-inverting input end of the first amplifier U1. The second electrode VM of the thermocouple 10 is connected with one end of the eighth resistor R8. The other end of the eighth resistor R8 is respectively connected with one end of the ninth resistor R9 and the inverting input end of the first amplifier U1. The other end of the ninth resistor R9 is connected with the output end of the first amplifier U1.

The first benchmark voltage signal vref1 is loaded onto the non-inverting input end of the first amplifier U1.

The first benchmark voltage module 22 includes the reference source U4, the fourth capacitor C4, the thirteenth resistor R13, and the fourteenth resistor R14. In this embodiment of this application, the first voltage follower U2 may be omitted. The first reference voltage signal REF3V0 is connected with the input end of the reference source U4. The output end of the reference source U4 is respectively connected with one end of the fourth capacitor C4 and one end of the thirteenth resistor R13. The other end of the fourth capacitor C4 is grounded. The other end of the thirteenth resistor R13 is respectively connected with one end of the fourteenth resistor R14 and the non-inverting input end of the first amplifier U1. The other end of the fourteenth resistor R14 is grounded.

A common connection point between the thirteenth resistor R13 and the fourteenth resistor R14 outputs the first benchmark voltage signal vref1, which is loaded onto the non-inverting input end of the first amplifier U1. The first reference voltage signal REF3V0 is an adjustable voltage signal, which may be obtained by passing the power supply through a resistor.

The specific circuit composition of the second benchmark voltage module 23 is not shown in FIG. 8. The circuit composition of the second benchmark voltage module 23 may be the same as that of the first benchmark voltage module 22, or it may only include the benchmark voltage source, so that the second reference voltage signal passes through the second benchmark voltage module to output a second benchmark voltage signal vref2. In some embodiments, the second reference voltage signal is an adjustable signal, the second benchmark voltage module 23 may be omitted, the voltage of the second reference voltage signal is directly adjusted to the voltage of the second benchmark voltage signal vref2, and the adjusted second reference voltage signal is used as the second benchmark voltage signal vref2, which will not be repeated here.

A second reference voltage signal Vshift may be outputted by a digital-to-analog converter integrated within the processor 30, or obtained by using a separate digital-to-analog converter chip.

The first signal amplification module 21 further includes a fifteenth resistor R15. The second buffer 50 is a second voltage follower U4. If the second benchmark voltage module 23 is omitted, the second reference voltage signal Vshift is connected to a non-inverting input end of the second voltage follower U4, and an inverting input end of the second voltage follower U4 is connected with an output end of the second voltage follower U4. The output end of the second voltage follower U4 is further connected with one end of the eighth resistor R8 through the fifteenth resistor R15. The second reference voltage signal Vshift passes through the second voltage follower U4 to output the second benchmark voltage signal vref2. The second benchmark voltage signal vref2 is loaded onto the inverting input end of the first amplifier U1. In this embodiment of this application, the voltage of the second benchmark voltage signal vref2 is the same as the voltage of the second reference voltage signal Vshift.

The first amplifier U1 outputs the first amplified signal S1. The first amplified signal S1 is filtered by the first filtering module. The voltage of the first amplified signal S1 is:

$$V_{\text{VTEM\_ADC}} = (R13/R7)*V_{th} - (R9/R15)*Vvref2 + Vvref1$$

where $V_{th}$ is the difference between the first potential signal and the second potential signal, Vvref2 is the voltage value of the second benchmark voltage signal vref2, and Vvref1 is the voltage value of the first benchmark voltage signal vref1.

In this embodiment of this application, Vvref1 is 2.5. If R7=100R, R13=100K, R9=100K and R16=5.6K, then $V_{\text{VTEM\_ADC}} = 1000V_{th} - 17.857*Vvref2 + 2.5$.

The working principle of the multi-point temperature measurement device 100 will be described below by way of an example.

When the temperature of the corresponding position on the conductor under test 200 is relatively low, the initial value defaults that the second benchmark voltage signal vref2 is 0 V, and the voltage of the first amplified signal S1 acquired by the processor 30 is 2.5 V.

When the temperature rises, $V_{th}$ begins to increase, and the voltage of the first amplified signal S1 acquired by the processor 30 increases. For example, when the output voltage of the first amplifier U1 approaches 3.0 V, the temperature rises to 10°C at this time and the electrodynamic potential at two ends of the thermocouple 10 is 0.5 mV, the processor 30 starts adjusting the second benchmark voltage signal vref2 to increase, and the processor 30 starts adjusting the voltage of the second benchmark voltage signal vref2 to 2.5/16 V (the digital-to-analog converter DAC in the processor 30 will use REF_2V5 as the reference, 2.5 V is of a Level-16 gradient, and the output voltage gradient of each level increases by 2.5/16 V). At this time, the output value of the first amplifier U1 is $V_{S1} = 1000*0.5*10^{(-3)} - 17.857*2.5/16 + 2.5 = 0.21$.

When the temperature is 300°C, the electrodynamic potential at the two ends of the thermocouple 10 is 12.207 mV. The digital-to-analog converter DAC in the processor 30 outputs a Level-5 voltage gradient, and the voltage of the second benchmark voltage signal vref2 is Vvref2=0.7813 V.

At this time, the output value of the first amplifier U1 is:

$$V_{S1} = 1000*12.207*10^{(-3)} - 17.857*2.5*5/16 + 2.5 = 0.7553 \text{ V}.$$

When the temperature is 500°C, the voltage of the second benchmark voltage signal vref2 is:

$$Vvref2 = 2.5*8/16 = 1.25 \text{ V}.$$

At this time, the output value of the first amplifier U1 is:

$$V_{S1}=20.64*10\^-3*1000-17.857*2.5*8/16+2.5=0.8188 \text{ V.}$$

When the temperature is 1000°C, the voltage of the second benchmark voltage signal vref2 is:

$$Vvref2=2.5*15/16=2.3438 \text{ V.}$$

At this time, the output value of the first amplifier U1 is:

$$V_{S1}=41.269*10\^-3*1000-17.857*2.5*15/16+2.5=1.9158 \text{ V.}$$

From the above example, it can be seen that when the temperature of the corresponding position on the conductor under test 200 changes, the first amplified signal S1 is detected and analyzed by the processor 30, and then the value of the second benchmark voltage signal vref2 is dynamically adjusted through the digital-to-analog converter DAC inside, so that the first amplified signal S1 always maintains at a relatively appropriate value, thus achieving accurate measurement over a wide temperature range.

The two benchmark voltage signals are respectively loaded onto the two input ends of the first amplifier U1, and the first reference voltage signal REF3V0 and the second reference voltage signal Vshift are both adjustable voltage signals, so that the values of the first benchmark voltage signal vrefl and the second benchmark voltage signal vref2 can be adjusted to change the value range of the first amplified signal S1, so that it always maintains within the sampling range of the processor 30. **In** addition, the voltage value of the first amplified signal S1 maintains within a relatively large range, thus facilitating the accurate sampling of the processor 30, improving the accuracy of temperature detection, and broadening the range of temperature detection.

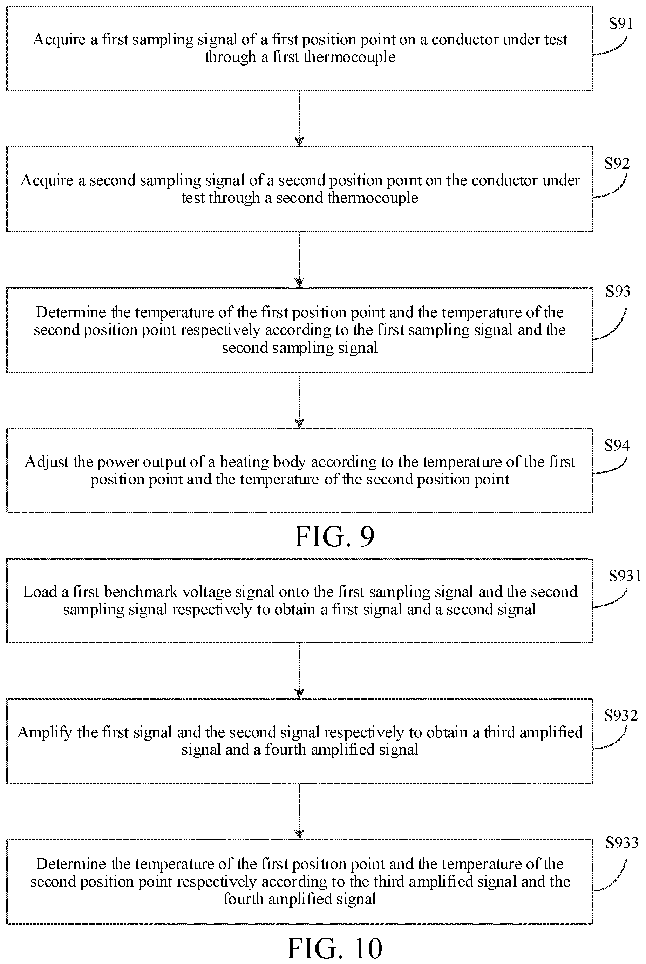

Please refer to FIG. 9, FIG. 9 is a schematic flowchart of a temperature control method according to an embodiment of this application. The temperature control method is applied to an aerosol generation device. The aerosol generation device includes a heating body configured to heat an aerosol-generation product to generate aerosols, a power source configured to provide power to the heating body, a first thermocouple and a second thermocouple respectively arranged at different position points on the heating body, and a controller. No current flows between a positive electrode of the first thermocouple and a negative electrode of the second thermocouple, and no current flows between a negative electrode of the first thermocouple and a positive electrode of the second thermocouple.

As shown in FIG. 9, the temperature control method includes:

S91, a first sampling signal of a first position point on a conductor under test is acquired through the first thermocouple;
S92, a second sampling signal of a second position point on the conductor under test is acquired through the second thermocouple;
S93, the temperature of the first position point and the temperature of the second position point are determined respectively according to the first sampling signal and the second sampling signal; and
S94, the power output of the heating body is adjusted according to the temperature of the first position point and the temperature of the second position point.

The temperature control method can sample the temperature of each position point on the conductor under test through the thermocouples, determine the temperature of the corresponding position according to the sampling signal, and finally adjust the power output of the heating body according to the temperature of each position point, thus accurately controlling the temperature of each position point on the conductor under test, and achieving accurate temperature control of multiple position points.

**In** some embodiments, as shown in FIG. 10, step S93 includes:

S931, a first benchmark voltage signal is loaded onto the first sampling signal and the second sampling signal respectively to obtain a first signal and a second signal;
S932, the first signal and the second signal are amplified respectively to obtain a third amplified signal and a fourth amplified signal; and
S933, the temperature of the first position point and the temperature of the second position point are determined respectively according to the third amplified signal and the fourth amplified signal.

The addition of the first benchmark voltage signal can improve the accuracy of signal processing, thus improving the accuracy of temperature detection.

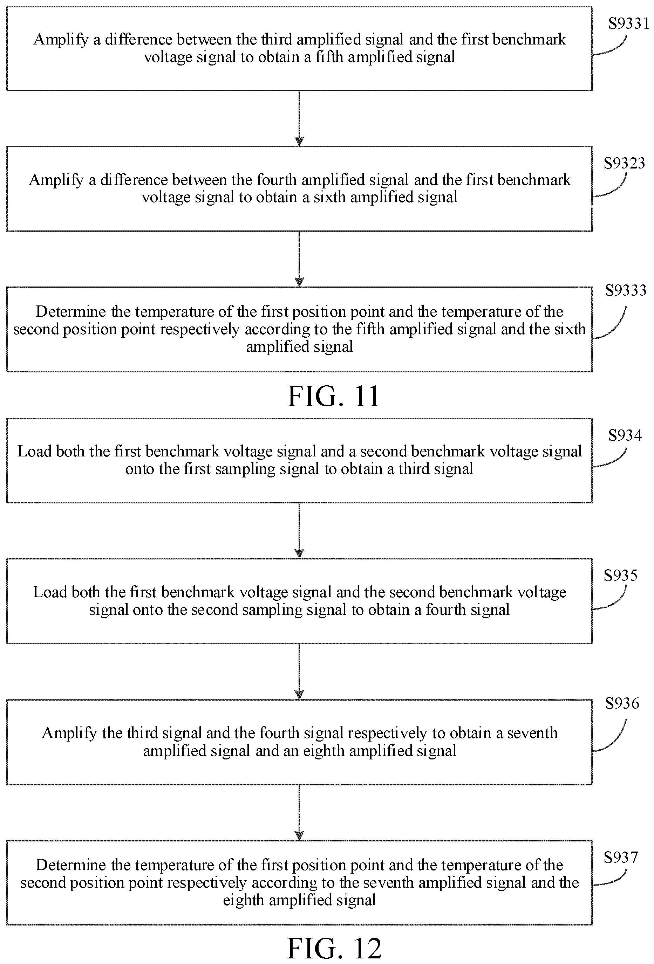

In some embodiments, as shown in FIG. 11, step S933 includes:

S9331, a difference between the third amplified signal and the first benchmark voltage signal is amplified to obtain a fifth amplified signal;

S9332, a difference between the fourth amplified signal and the first benchmark voltage signal is amplified to obtain a sixth amplified signal; and

S9333, the temperature of the first position point and the temperature of the second position point are determined respectively according to the fifth amplified signal and the sixth amplified signal.

The impact of the first benchmark voltage signal in the third amplified signal and the fourth amplified signal is eliminated, so that the fifth amplified signal and the sixth amplified signal are only related to the first sampling signal and the second sampling signal, thus further improving the accuracy of temperature detection at each position point.

In some embodiments, as shown in FIG. 12, step S93 further includes:

S934, both the first benchmark voltage signal and the second benchmark voltage signal are loaded onto the first sampling signal to obtain a third signal;

S935, both the first benchmark voltage signal and the second benchmark voltage signal are loaded onto the second sampling signal to obtain a fourth signal;

S936, the third signal and the fourth signal are amplified respectively to obtain a seventh amplified signal and an eighth amplified signal; and

S937, the temperature of the first position point and the temperature of the second position point are determined respectively according to the seventh amplified signal and the eighth amplified signal.

The addition of the dual benchmark voltage signals can broaden the temperature detection range on the basis of accurate detection of the temperature of the corresponding position point.

Finally, it should be noted that the above embodiments are only used for describing rather than limiting the technical solutions of this application. Under the ideas of this application, the technical features in the foregoing embodiments or different embodiments may be combined, the steps may be performed in any order, and many other changes of different aspects of this application also exists as described above, and these changes are not provided in detail for simplicity. Although this application has been described in detail with reference to the foregoing embodiments, it should be appreciated by a person of ordinary skill in the art that modifications may still be made to the technical solutions described in the foregoing embodiments, or equivalent replacements may be made to part of the technical features; and these modifications or replacements will not cause the essence of corresponding technical solutions to depart from the scope of the technical solutions in the embodiments of this application.

**Claims**

1. A multi-point temperature measurement device applied to an aerosol generation device, the multi-point temperature measurement device comprising: at least two thermocouples, at least two signal processing circuits, and a processor;

   the at least two thermocouples being arranged at different position points on a conductor under test, the thermocouples corresponding to the position points on the conductor under test on a one-to-one basis, the thermocouples corresponding to the signal processing circuits on a one-to-one basis;
   wherein the thermocouple comprises a first electrode and a second electrode, the first electrode is connected with a first input end of the corresponding signal processing circuit, the second electrode is connected with a second input end of the corresponding signal processing circuit, and an output end of the signal processing circuit is connected with the processor;
   wherein the thermocouple is configured to detect the temperature of a corresponding position on the conductor under test, a first potential signal is outputted through the first electrode and a second potential signal is outputted through the second electrode, the first potential signal and the second potential signal are processed by the signal processing circuit to obtain a first voltage signal, and the first voltage signal is processed by the processor to obtain the temperature of the corresponding position on the conductor under test; and
   wherein no current flows between any two of the thermocouples.

2. The multi-point temperature measurement device according to claim **1,** wherein no current dividing circuit is arranged between the first electrode and the first input end of the signal processing circuit, and no current dividing circuit is arranged between the second electrode and the second input end of the signal processing circuit.

3. The multi-point temperature measurement device according to claim **1,** wherein the at least two thermocouples comprise a first thermocouple and a second thermocouple, no closed loop is formed between the first electrode of the first thermocouple and the second electrode of the second thermocouple, and no closed loop is formed between the second electrode of the first thermocouple and the first electrode of the second thermocouple.

4. The multi-point temperature measurement device according to any one of claims 1 to 3, wherein

the signal processing circuit comprises a first signal amplification module and a first benchmark voltage module;
an input end of the first benchmark voltage module is connected with a first reference voltage signal, an output end of the first benchmark voltage module is connected with a first input end of the first signal amplification module or a second input end of the first signal amplification module, and the first benchmark voltage module is configured to provide a first benchmark voltage signal; and
the first input end of the first signal amplification module is connected with the first electrode, the second input end of the first signal amplification module is connected with the second electrode, an output end of the first signal amplification module is connected with the processor, and the first signal amplification module is configured to amplify a difference between the first potential signal and the second potential signal to obtain a first amplified signal, so that the processor processes the first amplified signal to obtain the temperature of the corresponding position on the conductor under test.

5. The multi-point temperature measurement device according to claim 4, further comprising a first buffer; wherein an input end of the first buffer is connected with the output end of the first benchmark voltage module, an output end of the first buffer is connected with the first input end of the first signal amplification module or the second input end of the first signal amplification module, and the first buffer is configured to isolate the first benchmark voltage module from the first signal amplification module.

6. The multi-point temperature measurement device according to claim 4, wherein the signal processing circuit further comprises a second signal amplification module; wherein the second signal amplification module is connected in series between the output end of the first signal amplification module and the processor, a first input end of the second signal amplification module is connected with the output end of the first signal amplification module, a second input end of the second signal amplification module is configured to access the first benchmark voltage signal, an output end of the second signal amplification module is connected with the processor, the second signal amplification module is configured to amplify a difference between the first amplified signal and the first benchmark voltage signal to obtain a second amplified signal, so that the processor performs processing according to the second amplified signal to obtain the temperature of the corresponding position.

7. The multi-point temperature measurement device according to claim 4, wherein the signal processing circuit further comprises a second benchmark voltage module;

an input end of the second benchmark voltage module is connected with a second reference voltage signal, an output end of the second benchmark voltage module is connected with the first input end of the first signal amplification module or the second input end of the first signal amplification module, and the second benchmark voltage module is configured to provide a second benchmark voltage signal; and
wherein the output end of the first benchmark voltage module and the output end of the second benchmark voltage module are respectively connected to different input ends of the first signal amplification module.

8. The multi-point temperature measurement device according to claim 7, further comprising a second buffer; wherein an input end of the second buffer is connected with the output end of the second benchmark voltage module, an output end of the second buffer is connected with the first input end of the first signal amplification module or the second input end of the first signal amplification module, and the second buffer is configured to isolate the second benchmark voltage module from the first signal amplification module.

9. The multi-point temperature measurement device according to claim 7, wherein the second reference voltage signal is an adjustable voltage signal.

10. An aerosol generation device, comprising a heating body configured to heat an aerosol-generation product to generate aerosols, a power source configured to provide power to the heating body, a controller, and the multi-point temperature measurement device according to any one of claims 1 to 9;

the heating body being a conductor, and the heating body comprising a plurality of heating zone;

the at least two thermocouples being arranged in different heating zones of the heating body; and

the controller being configured to adjust the power provided by the power source to at least one of the heating zones according to the temperature of each heating zone.

11. The aerosol generation device according to claim 10, wherein the heating body is a resistive heating body, a semiconductor, a resistive thin film heater, or an infrared thin film heater.

12. A temperature control method applied to an aerosol generation device, the aerosol generation device comprising a heating body configured to heat an aerosol-generation product to generate aerosols, a power source configured to provide power to the heating body, a first thermocouple and a second thermocouple respectively arranged at different position points on the heating body, and a controller; wherein no current flows between a positive electrode of the first thermocouple and a negative electrode of the second thermocouple, and no current flows between a negative electrode of the first thermocouple and a positive electrode of the second thermocouple; the method comprises:

acquiring a first sampling signal of a first position point on a conductor under test through the first thermocouple;

acquiring a second sampling signal of a second position point on the conductor under test through the second thermocouple;

determining the temperature of the first position point and the temperature of the second position point respectively according to the first sampling signal and the second sampling signal; and

adjusting the power output of the heating body according to the temperature of the first position point and the temperature of the second position point.

13. The temperature control method according to claim 12, wherein the determining the temperature of the first position point and the temperature of the second position point respectively according to the first sampling signal and the second sampling signal comprises:

loading a first benchmark voltage signal onto the first sampling signal and the second sampling signal respectively to obtain a first signal and a second signal;

amplifying the first signal and the second signal respectively to obtain a third amplified signal and a fourth amplified signal; and

determining the temperature of the first position point and the temperature of the second position point respectively according to the third amplified signal and the fourth amplified signal.

14. The temperature control method according to claim 13, wherein the determining the temperature of the first position point and the temperature of the second position point respectively according to the third amplified signal and the fourth amplified signal comprises:

amplifying a difference between the third amplified signal and the first benchmark voltage signal to obtain a fifth amplified signal;

amplifying a difference between the fourth amplified signal and the first benchmark voltage signal to obtain a sixth amplified signal; and

determining the temperature of the first position point and the temperature of the second position point respectively according to the fifth amplified signal and the sixth amplified signal.

15. The temperature control method according to claim 12, wherein the determining the temperature of the first position point and the temperature of the second position point respectively according to the first sampling signal and the second sampling signal further comprises:

loading both a first benchmark voltage signal and a second benchmark voltage signal onto the first sampling signal to obtain a third signal;

loading both the first benchmark voltage signal and the second benchmark voltage signal onto the second sampling signal to obtain a fourth signal;

amplifying the third signal and the fourth signal respectively to obtain a seventh amplified signal and an eighth amplified signal; and

determining the temperature of the first position point and the temperature of the second position point respectively according to the seventh amplified signal and the eighth amplified signal.

FIG. 1a

FIG. 1b

EP 4 575 435 A1

Multi-point temperature measurement device 100

Processor 30

First voltage signal

Signal processing circuit 20

First voltage signal

Signal processing circuit 20

First potential signal

Second potential signal

Thermocouple 10

First potential signal

Second potential signal

Thermocouple 10

Position Point A

Position Point B

Conductor under test 200

FIG. 2

FIG. 3

Multi-point temperature measurement device 100

Processor 30

First amplified signal

First benchmark voltage module 22

First reference voltage signal

First buffer 40

First benchmark voltage signal

First signal amplification module 21

First potential signal

Second potential signal

Thermocouple 10

Position Point A

Conductor under test 200

EP 4 575 435 A1

FIG. 4

Multi-point temperature
measurement device 100

First reference
voltage signal

First benchmark
voltage module 22

First butter 40

Processor 30

First benchmark
voltage signal

Conductor
under test
200

Position
Point A

Thermocouple
10

First potential signal

Second potential signal

First signal
amplification
module 21

First
amplified
signal

Second
benchmark
voltage signal

Second buffer 50

Second benchmark
voltage module 23

Second
reference
voltage signal

FIG. 5

vref1

VP

VM

Vth

U2

C1

R1    R2

U1

R3    R4

C2

21

R5    R6    S1

C3    C4

## FIG. 6

REF3v0

PP2V5

22

40

U4

VIN

OUT

GND

C4

R13

R14

U2

vref1

R7

VP

VM

Vth

U1

R8    R9

21

R10

R11

U3

R12

23

R5    R6    S2

C3    C4

vref1

## FIG. 7

FIG. 8

| Acquire a first sampling signal of a first position point on a conductor under test through a first thermocouple | S91 |

| Acquire a second sampling signal of a second position point on the conductor under test through a second thermocouple | S92 |

| Determine the temperature of the first position point and the temperature of the second position point respectively according to the first sampling signal and the second sampling signal | S93 |

| Adjust the power output of a heating body according to the temperature of the first position point and the temperature of the second position point | S94 |

## FIG. 9

| Load a first benchmark voltage signal onto the first sampling signal and the second sampling signal respectively to obtain a first signal and a second signal | S931 |

| Amplify the first signal and the second signal respectively to obtain a third amplified signal and a fourth amplified signal | S932 |

| Determine the temperature of the first position point and the temperature of the second position point respectively according to the third amplified signal and the fourth amplified signal | S933 |

## FIG. 10

Amplify a difference between the third amplified signal and the first benchmark voltage signal to obtain a fifth amplified signal — S9331

Amplify a difference between the fourth amplified signal and the first benchmark voltage signal to obtain a sixth amplified signal — S9323

Determine the temperature of the first position point and the temperature of the second position point respectively according to the fifth amplified signal and the sixth amplified signal — S9333

## FIG. 11

Load both the first benchmark voltage signal and a second benchmark voltage signal onto the first sampling signal to obtain a third signal — S934

Load both the first benchmark voltage signal and the second benchmark voltage signal onto the second sampling signal to obtain a fourth signal — S935

Amplify the third signal and the fourth signal respectively to obtain a seventh amplified signal and an eighth amplified signal — S936

Determine the temperature of the first position point and the temperature of the second position point respectively according to the seventh amplified signal and the eighth amplified signal — S937

## FIG. 12

## INTERNATIONAL SEARCH REPORT

| International application No. |
|---|
| **PCT/CN2023/109938** |

**A. CLASSIFICATION OF SUBJECT MATTER**

G01K7/02(2021.01)i

According to International Patent Classification (IPC) or to both national classification and IPC

**B. FIELDS SEARCHED**

Minimum documentation searched (classification system followed by classification symbols)

IPC:G01K

Documentation searched other than minimum documentation to the extent that such documents are included in the fields searched

Electronic data base consulted during the international search (name of data base and, where practicable, search terms used)

CNTXT, CNABS: 气溶胶, 检测, 热电偶, 并联, 电流, 流动, 屏蔽, 隔离, 功率, 调节, 信号, 处理, 调理, 放大, 补偿, 参考, 基准, 温度, 校正, 校准; VEN, DWPI, USTXT, EPTXT: aerosol, detect, thermocouple, Parallel, current, flow, isolation, shielding, power, regulation, singal, process, conditioning, amplificate, compensation, reference, temperature, calibrate

**C. DOCUMENTS CONSIDERED TO BE RELEVANT**

| Category* | Citation of document, with indication, where appropriate, of the relevant passages | Relevant to claim No. |
|---|---|---|
| Y | CN 112385902 A (SHENZHEN FIRST UNION TECHNOLOGY CO., LTD.) 23 February 2021 (2021-02-23) <br> description, paragraphs 46-65 | 1-15 |
| Y | CN 101441115 A (HARBIN ENGINEERING UNIVERSITY) 27 May 2009 (2009-05-27) <br> description, page 3, and figure 1 | 1-15 |
| Y | CN 112729579 A (CHINA SOUTH INDUSTRIES GROUP CORPORATION, INSTITUTE OF AUTOMATION) 30 April 2021 (2021-04-30) <br> description, paragraphs 44-60, and figures 1-4 | 1-15 |
| Y | CN 215726424 U (CHINA NATIONAL PETROLEUM CORP.) 01 February 2022 (2022-02-01) <br> description, paragraphs 33-58, and figures 1-4 | 1-11 |
| Y | CN 103668128 A (TANG OPTOELECTRONICS EQUIPMENT CO., LTD.) 26 March 2014 (2014-03-26) <br> description, paragraphs 13-80, and figures 1-10 | 10-15 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 October 2023** | **04 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/109938** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 103913249 A (BEIJING AEONMED CO., LTD.) 09 July 2014 (2014-07-09)<br>entire document | 1-15 |
| A | US 2013144549 A1 (TEMKINE GRIGORI et al.) 06 June 2013 (2013-06-06)<br>entire document | 1-15 |

Form PCT/ISA/210 (second sheet) (July 2022)

**INTERNATIONAL SEARCH REPORT**
Information on patent family members

International application No.

**PCT/CN2023/109938**

| Patent document cited in search report | | | Publication date (day/month/year) | Patent family member(s) | | | Publication date (day/month/year) |
|---|---|---|---|---|---|---|---|
| CN | 112385902 | A | 23 February 2021 | None | | | |
| CN | 101441115 | A | 27 May 2009 | CN | 101441115 | B | 11 May 2011 |
| CN | 112729579 | A | 30 April 2021 | CN | 112729579 | B | 26 September 2023 |
| CN | 215726424 | U | 01 February 2022 | None | | | |
| CN | 103668128 | A | 26 March 2014 | CN | 103668128 | B | 24 February 2016 |
| CN | 103913249 | A | 09 July 2014 | None | | | |
| US | 2013144549 | A1 | 06 June 2013 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211003897